# EUROPÄISCHE PATENTANMELDUNG

(11) **EP 2 412 473 A1**
(43) Veröffentlichungstag der Anmeldung: **01.02.2012**
(21) Anmeldenummer: 10007807.0
(22) Anmeldetag: 27.07.2010
(51) Int. Cl.: B23K 33/00, F16L 13/04, B23K 9/028, B23K 26/28, F01D 25/24

(54) **Verfahren zur Schweißung von Halbschalen**

(71) Anmelder: SIEMENS AKTIENGESELLSCHAFT, 80333 München (DE)
(72) Erfinder: Lenz, Christian, Dr., 45468 Mülheim an der Ruhr (DE); Niepold, Karsten, 45481 Mülheim (DE); Zander, Uwe, 45475 Mülheim an der Ruhr (DE)

(57) **Zusammenfassung**

Die Erfindung betrifft ein Verfahren zur Schweißung von Halbschalen (1, 2, 3, 4) und somit ein Verfahren zur Herstellung von großvolumigen Baueilen, wie beispielsweise einem Innengehäuse für eine Dampfturbine, wobei zwei Halbschalen (1, 2) zu einem rohrähnlichen Querschnitt miteinander verbunden werden und mit zwei weiteren, miteinander verbundenen Halbschalen (3, 4) miteinander über eine Rundnaht (12) verschweißt werden.

## Beschreibung

Die Erfindung betrifft ein Verfahren zur Schweißung von Halbschalen, wobei eine erste obere Halbschale mit einer ersten unteren Halbschale sowie eine zweite obere Halbschale mit einer unteren Halbschale miteinander verbunden werden.

Im Dampfturbinenbau werden großvolumige Bauteile aus vergleichsweise teurem Material gefertigt. Oft ist es nur über gießtechnische Verfahren möglich, diese großvolumigen Bauteile herzustellen. Es ist manchmal dennoch unumgänglich, ein großes Bauteil mittels eines einzigen gießtechnischen Verfahrens herzustellen. Solche Bauteile müssen meist durch komplexe Schweißung miteinander verbunden werden.

Ein Beispiel solcher komplexen Bauteile sind dickwandige Halbschalen. Die Gehäuse für Strömungsmaschinen, wie z.B. für Dampfturbinen, werden mittels großvolumiger Bauteile hergestellt. In der Regel umfasst ein Gehäuse ein Oberteil und ein Unterteil. Diese Oberteile und Unterteile ähneln der Form einer Halbschale. Da eine ganze Halbschale oftmals nicht mittels eines einzigen gießtechnischen Verfahrens als Komplettabguss hergestellt werden kann, werden heutzutage zwei Halbschalen stirnseitig miteinander verschweißt. Allerdings sind solche halben Rundnahtschweißungen an dickwandigen Halbschalen wegen der offenen Struktur und der initiierten Eigenspannungen infolge des Energieeintrags in die dickwandigen Bauteile beim Schweißen infolge behinderter Wärmedehnungen mit einem großen Verzug des Bauteils verbunden. Darüber hinaus ist oftmals die Qualität solcher Schweißnähte herabgesetzt.

Oftmals wird der Schweißverzug vor Beginn der Schweißung abgeschätzt und im Bezug auf die geforderten Endabmessungen derart vorgehalten, dass sich die Teile beim Schweißen möglichst geradeziehen. Allerdings ist dies bei sehr dickwandigen Bauteilen nur bedingt möglich und außerdem verursacht dies hohe Eigenspannungen. Die Erfindung versucht hier Abhilfe zu schaffen.

Es ist Aufgabe der Erfindung, ein Verfahren anzugeben, mit dem Halbschalen miteinander verschweißt werden können bei einer guten Formhaltigkeit während des Schweißvorganges.

Gelöst wird dies durch ein Verfahren zur Schweißung von Halbschalen, wobei eine erste obere Halbschale mit einer ersten unteren Halbschale form- und/oder kraftschlüssig miteinander verbunden wird, wobei eine zweite obere Halbschale mit einer zweiten unteren Halbschale form- oder kraftschlüssig miteinander verbunden wird, wobei die verbundene erste obere und erste untere Halbschale mit der verbundenen zweiten oberen und zweiten unteren Halbschale miteinander verschweißt werden.

Es wird demnach die komplexe Schweißung zweier Halbschalen stirnflächenseitig auf eine technologisch bekannte geschlossene Rundschweißung zurückgeführt. Solche Rundschweißungen sind beispielsweise bei Rotorschweißungen bekannt. Erfindungsgemäß wird somit zunächst eine erste obere Halbschale mit einer zweiten unteren Halbschale miteinander verbunden. In einem zweiten Schritt wird eine zweite obere Halbschale mit einer zweiten unteren Halbschale miteinander verbunden. Diese zwei miteinander verbundenen Halbschalen, die nunmehr eine Vollschale im Wesentlichen darstellen, sind an einer stirnseitigen Seite miteinander verbunden. Diese Verbindung erfolgt erfindungsgemäß mittels einer Schweißung. Aus Symmetriegründen wird mit der Kopplung der Bauteile vor dem Schweißen ein Verziehen während des Schweißens minimiert, da die zu Vollschalen ausgebildeten Bauteile dem Verzug eines höheren Bauteilwiderstand entgegenbringen als ungekoppelte Halbschalen. Darüber hinaus kann die Endbearbeitung der Bauteile, da nach dem Schweißvorgang weniger Verzug ausgebildet ist, schneller durchgeführt werden. Die umlaufende Rundnaht ermöglicht eine ununterbrochene, qualitativ hochwertige Rundnahtschweißung, wie sie bei Rohrquerschnitten möglich ist.

Mit der Erfindung ist es somit möglich, mehrteilige dickwandige Halbschalen herzustellen, die wegen gießtechnischer Probleme nicht aus einem Stück hergestellt werden können. Des Weiteren können bei dem erfindungsgemäßen Verfahren verschiedene Werkstoffe miteinander kombiniert werden, was zu einer besseren Ausnutzung der Werkstoffeigenschaften und einer Kosteneinsparung bei der Beschaffung führen kann.

Außerdem sind die während des Schweißens eingebrachten Eigenspannungen, welche im Zuge der Wärmenachbehandlung auch noch weitestgehend vor dem horizontalen Trennen der Bauteile relaxieren lediglich mit marginalen Verzügen verbunden, was zu einer verbesserten Formhaltung der Bauteile im Zuge der Wärmenachbehandlung führt.

In den Unteransprüchen sind vorteilhafte Weiterbildungen angegeben.

In einer ersten vorteilhaften Weiterbildung wird eine Rundschweißung verwendet.

Rundschweißungen sind aus Symmetriegründen besonders geeignet, um rotationssymmetrische Körper miteinander formschlüssig zu verbinden.

In einer weiteren vorteilhaften Weiterbildung wird die erste obere und die erste untere Halbschale und/oder die zweite obere und die zweite untere Halbschale mittels Schrauben, Schrumpfringen oder Deckeln miteinander verbunden. Die Schrauben, Schrumpfringe oder Deckel führen vor dem Verschweißen zu einer Versteifung. Das bedeutet, dass während des Schweißvorgangs ein Verziehen der Bauteile minimiert wird.

In einer weiteren vorteilhaften Weiterbildung wird nach der Schweißung zunächst eine geeignete Wärmenachbehandlung durchgeführt und erst dann die erste obere und die zweite obere Halbschale an einer horizontalen Teilfuge von der ersten unteren und der zweiten unteren Halbschale getrennt. Dadurch werden Bauteilverzüge, die während des Schweißens aufgetreten, vermindert.

In einer weiteren vorteilhaften Weiterbildung sind die Halbschalen im Wesentlichen gleich groß. Durch die Verwendung von gleich großen Bauteilen, was auch gleichzeitig bedeutet, dass diese Bauteile im Wesentlichen dieselbe Masse aufweisen, kann das Schweißverfahren optimiert werden. Zudem werden Bauteilverzüge, die sich durch unterschiedliche Massenverteilung ergeben, wirksam verhindert.

In einer vorteilhaften Weiterbildung werden die erste obere und die zweite obere sowie die erste untere und die zweite untere Halbschale aus unterschiedlichen Werkstoffen ausgebildet. Somit wird es möglich, werkstoffungleiche Halbschalen miteinander zu verschweißen. Es ist zudem vorteilhaft, wenn die beiden unterschiedlichen Werkstoffe derart ausgewählt werden, dass diese unterschiedliche Eigenschaften aufweisen. So kann beispielsweise ein warmfestes Material verwendet werden und mit einem kaltzähen Material verschweißt werden. Dadurch würde solch ein miteinander verschweißtes Bauteil beispielsweise - je nach Erfordernis - sowohl kaltzähe als auch warmfeste Eigenschaften aufweisen können.

Vorteilhafterweise ist die erste obere und erste untere Halbschale aus einem Stahlguss und die zweite obere und die zweite untere Halbschale aus Nickelbasisguss gewählt. Das Material Nickelbasis ist besonders für Hochtemperaturanwendungen hervorragend einsetzbar. In Verbindung mit Stahlguss für die erste obere und die erste untere Halbschale wird somit eine gesamte Halbschale erstellt, die hervorragende Eigenschaften bezüglich Temperatur und Druckverhalten sowie Festigkeit aufweist. Dem gleichen Prinzip folgend kann die erste obere und erste untere Halbschale aus einem Stahlguss mit hohem Chromanteil (hochwarmfest aber teuer) und die zweite obere und die zweite untere Halbschale aus einem Stahlguss mit niedrigem Chromanteil gewählt werden (nicht ganz so warmfest aber günstiger).

Die Erfindung wird anhand eines Ausführungsbeispieles näher erläutert. Bauteile mit denselben Bezugszeichen weisen in der Regel dieselben Eigenschaften auf.

Es zeigen:
- FIG 1: eine Darstellung von vier Halbschalen vor einem ersten Verfahrensschritt;
- FIG 2: eine Darstellung der zusammengeschweißten Halbschalen in einem zweiten Verfahrensschritt und
- FIG 3: eine Darstellung der zusammengeschweißten Halbschalen nach örtliche Trennung der Teilfuge im Bereich der Rundnaht..

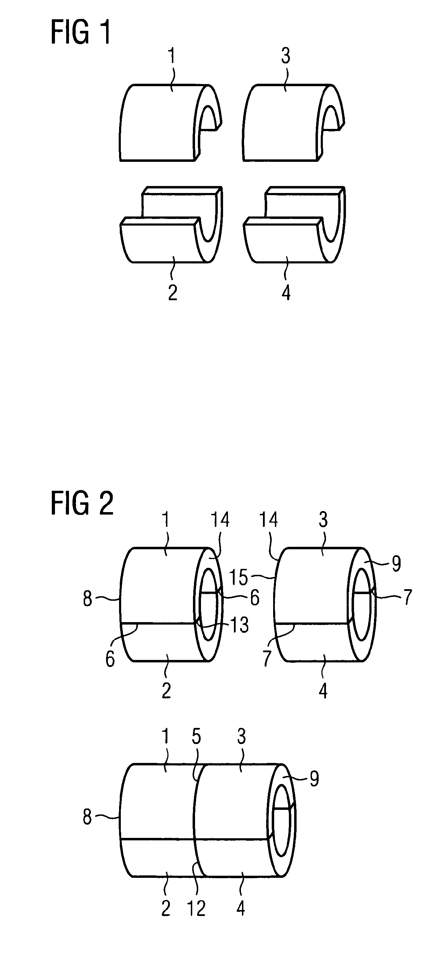

Die FIG 1 zeigt in einer explosionsartigen Darstellung eine erste obere Halbschale 1, eine erste untere Halbschale 2, eine zweite obere Halbschale 3 sowie eine zweite untere Halbschale 4. Die vorgenannten Halbschalen 1, 2, 3, 4 können das Innengehäuse einer Strömungsmaschine, wie z.B. einer Dampfturbine darstellen. An solche Gehäusebauteile werden erhöhte thermische und mechanische Anforderungen gestellt. So müssen diese Gehäuseteile beispielsweise Temperaturen von bis zu 700°C und einem Druck von bis zu 350bar standhalten. Werkstoffe auf Nickelbasis können solchen hohen Temperaturen und Drücken in der Regel standhalten.

Es ist üblich, solche Bauteile zu gießen. Nach dem Gießvorgang weisen die Bauteile im Wesentlichen die Endgeometrie auf. Allerdings sind die Geometrien bzw. äußeren Maße der Bauteile derart groß, dass ein Gießen aus einem Stück nicht möglich ist. Darüber hinaus müssen die Innengehäuse von Dampfturbinen unterschiedlichen Anforderungen gerecht werden. So muss beispielsweise das Innengehäuse in einem Bereich, wo der heiße und unter hohem Druck stehende Frischdampf einströmt, vorzugsweise warmfeste Eigenschaften aufweisen. In einem in Strömungsrichtungsverlauf weiter hinten angeordneten Bereich weist der Dampf z.B. in Folge Expansion geringere Temperaturen und Drücke auf. Daher muss das Gehäuse in diesem Bereich vorzugsweise kaltzähe bzw. weniger warmfeste Eigenschaften aufweisen. Um solchen Anforderungen gerecht zu werden, werden verschiedene Werkstoffe verwendet, die miteinander verbunden werden müssen. So kann beispielsweise die erste obere 1 und die erste untere 2 Halbschale aus einem Stahlguss gefertigt sein. Die zweite obere 3 und die zweite untere 4 Halbschale kann aus einem vergleichsweise teuren Nickelbasisstoff hergestellt sein. Die FIG 1 zeigt einen ersten Verfahrensschritt, wonach die erste obere Halbschale 1, die erste untere Halbschale 2, die zweite obere Halbschale 3 sowie die zweite untere Halbschale 4 im Wesentlichen halbkreisförmig ausgebildet werden. Die erste obere Halbschale 1 und erste untere Halbschale 2 sind im Wesentlichen gleich groß und weisen im Wesentlichen ähnliche Massen auf. Dies trifft auch auf die zweite obere 3 und die auf die zweite untere Halbschale 4 zu, die im Wesentlichen die gleiche Masse und die gleiche Größe aufweisen.

Die FIG 2 zeigt einen nächsten Verfahrensschritt, wonach die erste obere Halbschale 1 und die erste untere Halbschale 2 zu einem geschlossen rohrähnlichen Querschnitt vormontiert werden. Dies wird ermöglicht durch Schrauben oder andere geeignete form- und/oder kraftschlüssig einsetzbare Fügeelemente. Die erste obere 1 und die erste untere Halbschale 2 bilden nach der vorgenannten Vormontage im Wesentlichen einen Ring, der mechanisch kompakt und fest verbunden ausgebildet ist. Ebenso wird die zweite obere Halbschale 3 und die zweite untere Halbschale 4 zu einem geschlossenen rohrähnlichen Querschnitt vormontiert. Dies geschieht ebenso durch geeignete Schrauben oder andere geeignete Fügeelemente, die die Halbschalen form- und/oder kraftschlüssig miteinander verbinden.

In einem nächsten Verfahrensschritt wird, wie in FIG 2 gezeigt, ein Schweißvorgang durchgeführt, der die erste obere Halbschale 1 und die erste untere Halbschale 2 mit der zweiten oberen Halbschale 3 und der zweiten unteren Halbschale 4 an der Stirnfläche miteinander verschweißt. Dieser Vorgang geschieht durch ein kontinuierliches Schweißen einer Rundnaht 5.

Die durch Schrauben und andere Fügeelemente form- und kraftschlüssig verbundenen Halbschalen 1, 2, 3, 4 bewirken eine bessere Formhaltigkeit während des Schweißvorgangs. Beim Schweißvorgang muss darauf geachtet werden, dass der Wärmeeinträg keinen kritischen Wert überschreitet. Eine gute Formhaltigkeit der einzelnen, zu einem rohrähnlichen Querschnitt zusammengefügten Halbschalen 1, 2, 3, 4 kann verbessert werden, indem beispielsweise Schrauben, Schrumpfringe und Deckel verwendet werden. Die Schrauben werden an Teilfugen 6 und 7 eingesetzt. Die Schrauben führen zu einer guten Festigkeit der miteinander verbundenen Halbschalen. Die Schrumpfringe werden um die erste obere Halbschale 1 und die erste untere Halbschale 2 sowie um die zweite obere Halbschale 3 und die zweite untere Halbschale 4 angeordnet. Die Schrumpfringe sind in der FIG 2 nicht näher dargestellt.

Eine weitere Möglichkeit zur Versteifung der zu einem rohrähnlichen Querschnitt zusammengefügten Halbschalen 1, 2, 3, 4 kann durch die Verwendung von Deckeln, die in der FIG 2 nicht näher dargestellt sind, verbessert werden. Die Deckel werden hierbei an einer stirnseitigen Seite 8 bzw. 9 kraftschlüssig mit der ersten oberen Halbschale 1 sowie der ersten unteren Halbschale 2 und der zweiten oberen Halbschale 3 sowie der zweiten unteren Halbschale 4 angeordnet.

Die Versteifung der Struktur während des Verschweißens und der nachfolgenden Wärmenachbehandlung führt zu einem minimalen Schweißverzug und zur Kosteneinsparung hinsichtlich Dimensionierung und Endbearbeitung der Bauteile, da die während des Schweißens eingebrachten Eigenspannungen lediglich marginale Verzüge während des Schweißens erzeugen können und über die Formhaltung der Bauteile im Zuge der Wärmenachbehandlung weitestgehend noch vor dem Trennen der Bauteile relaxieren. Die mittels der Rundschweißung erzeugte Rundnaht 12 ermöglicht eine ununterbrochene und qualitativ hochwertige Rundnahtschweißung, wie sie bei Rohrquerschnitten bekannt und eingesetzt ist. Eine Verwendung von An- und Überlaufblechen wird somit überflüssig. Bei der Verwendung von hochwertigen und/oder teueren Werkstoffen können durch das erfindungsgemäße mehrteilige Verfahren verschiedene Werkstoffen gemäß ihrer ökonomischen Notwendigkeit verwendet werden. Daher können die Werkstoffeigenschaften besser ausgenutzt werden, was zu einer Kosteneinsparung bei der Beschaffung führt.

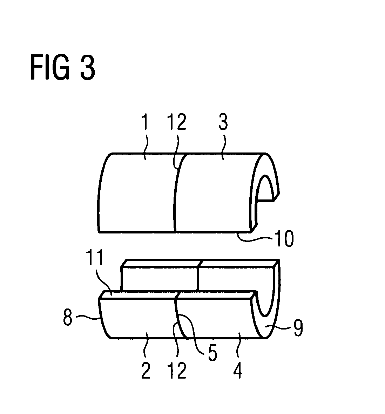

In einem nächsten Verfahrensschritt wird, wie in FIG 3 dargestellt, eine im Wesentlichen endgültige Form des Gesamtbauteils durch einen anschließenden horizontalen Trennschnitt 10 entlang einer Teilfläche 11 erreicht. Durch diesen Verfahrensschritt wird eine gemeinsame erste obere Halbschale 1 und eine zweite obere Halbschale 3, die durch eine Rundschweißung 5 miteinander verbunden sind, erreicht. Genauso wird eine gemeinsame untere Halbschale 2 und eine zweite untere Halbschale 4, die durch eine Rundschweißung 5 miteinander verbunden ist, erreicht. Das erfindungsgemäße Verfahren eignet sich hervorragend für die Herstellung von Gehäusen für Dampfturbinen, die aus unterschiedlichen Werkstoffen hergestellt werden sollen, wobei Stahlguss und Nickelbasisguss verwendet wird. Der höherwertige Werkstoff ist in der Gesamtgröße des fertigen Bauteils gießtechnisch nicht herstellbar. Eine Herstellung solcher großdimensionierten Bauteile ist durch das erfindungsgemäße Verfahren dennoch möglich. Die erste obere Halbschale 1 und die erste untere Halbschale 2 sind zur Vermeidung eines Spaltes im Bereich der späteren Rundnaht 12 durch eine Verbindungsschweißung 13 entlang einer Stirnfläche 14 miteinander verbunden. Die abschließende Trennung der ersten oberen Halbschale 1 und der ersten unteren Halbschale 2 horizontal in der Teilfuge 6 muss dann nur noch lokal im Bereich der Rundnahtschweißung 5 erfolgen.

Genauso wird bei der zweiten oberen Halbschale 3 und der zweiten unteren Halbschale 4 vorgegangen, die ebenso eine Verbindungsschweißung 15 aufweist, die in einer abschließenden Trennung der Halbschalen horizontal in der Teilfuge 7 nur noch lokal im Bereich der Rundnahtschweißung 5 erfolgen muss.

## Patentansprüche

1. Verfahren zur Schweißung von Halbschalen (1, 2, 3, 4),
wobei eine erste obere Halbschale (1) mit einer ersten unteren Halbschale (2) form- und/oder kraftschlüssig miteinander verbunden werden,
wobei eine zweite obere Halbschale (3) mit einer zweiten unteren Halbschale (4) form- und/oder kraftschlüssig miteinander verbunden werden,
wobei die verbundene erste obere (1) und erste untere Halbschale (2) mit der verbundenen zweiten oberen (3) und zweiten unteren Halbschale (4) miteinander verschweißt werden.

2. Verfahren nach Anspruch 1,
wobei eine Rundschweißung verwendet wird.

3. Verfahren nach Anspruch 1 oder 2,
wobei die erste obere (1) und die erste untere Halbschale (2) und/oder die zweite obere (3) und zweite untere Halbschale (4) mittels Schrauben, Schrumpfringen oder Deckeln miteinander verbunden werden.

4. Verfahren nach einem der vorhergehenden Ansprüche,
wobei während des Schweißens ein Deckel aufgestülpt wird.

5. Verfahren nach einem der vorhergehenden Ansprüche,
wobei nach der Schweißung die erste obere (1) und zweite obere Halbschale (3) an einer horizontalen Teilfuge (6, 7) von der ersten unteren (2) und zweiten unteren Halbschale (4) getrennt werden.

6. Verfahren nach einem der vorhergehenden Ansprüche,
wobei die Halbschalen (1, 2, 3, 4) im Wesentlichen gleich groß sind.

7. Verfahren nach einem der vorhergehenden Ansprüche,
wobei die erste obere (1) und die zweite obere (3) sowie die erste untere (2) und die zweite untere Halbschale (4) aus unterschiedlichen Werkstoffen ausgebildet wird.

8. Verfahren nach einem der vorhergehenden Ansprüche,
wobei für die erste obere (1) und erste untere Halbschale (2) ein Stahlguss und für die zweite obere (3) und zweite untere Halbschale (4) ein Nickelbasisguss verwendet wird.

9. Verfahren nach einem der vorhergehenden Ansprüche,
wobei die erste obere (1) und erste untere Halbschale (2) und/oder die zweite obere (3) und zweite untere Halbschale (4) an der Stirnfläche im Bereich der späteren Schweißung, insbesondere Rundnaht (12), durch eine Verbindungsschweißung miteinander verbunden werden.
